# EUROPEAN PATENT APPLICATION

(11) **EP 2 214 250 A1**
(43) Date of publication of application: **04.08.2010**
(21) Application number: 08849218.6
(22) Date of filing: 14.11.2008
(51) Int. Cl.: H01M 14/00, H01L 31/04, H01M 2/22

(54) **ELECTRODE SUBSTRATE FOR PHOTOELECTRIC CONVERSION DEVICE, METHOD FOR MANUFACTURING ELECTRODE SUBSTRATE FOR PHOTOELECTRIC CONVERSION DEVICE, AND PHOTOELECTRIC CONVERSION DEVICE**

(30) Priority: 15.11.2007 JP 2007296440
(71) Applicant: Fujikura, Ltd., Tokyo 135-8512 (JP)
(72) Inventor: MATSUI, Hiroshi, Sakura-shi Chiba 285-8550 (JP); OKADA, Kenichi, Sakura-shi Chiba 285-8550 (JP)
(74) Representative: Hodsdon, Stephen James
(86) International application number: PCT/JP2008/070757
(87) International publication number: WO 2009/063973

(57) **Abstract**

A method of manufacturing an electrode substrates for a photoelectric conversion element which includes: forming a transparent conductive layer and a collector wire on a substrate; forming a porous oxide semiconductor layer on different portions of the transparent conductive layer from portions on which the collector wire is formed; firing the porous oxide semiconductor layer; forming a protective layer composed of an insulating resin having thermal resistance at 250 °C or higher so as to cover the collector wire after the firing; and after forming the protective layer, allowing adsorption of dyes in the porous oxide semiconductor layer, and heating the substrate at 250 °C or higher during or after the formation of the protective layer and before allowing adsorption of the dyes in the porous oxide semiconductor layer.

## Description

### BACKGROUND OF THE INVENTION

### Field of the Invention

The present invention relates to an electrode substrate used for a photoelectric conversion element such as a dye-sensitized solar cell and the like, a method of manufacturing an electrode substrate for a photoelectric conversion element, and a photoelectric conversion element.
Priority is claimed on Japanese Patent Application No. 2007-296440, filed on November 15, 2007, the content of which is incorporated herein by reference.

### Description of the Related Art

For an electrode substrate used for a photoelectric conversion element such as a dye-sensitized solar cell, a transparent conductive layer formed on a surface of a transparent substrate has been used. When a large-area and high-output element (module) for practical use is to be manufactured, there have been attempts such as forming collector wires to increase conductivity of the electrode substrate in order to suppress increase in internal resistance caused by low conductivity of the transparent conductive substrate. For the collector wires, a material with high conductivity such as metal (for example, silver, copper, and the like) with, particularly, low resistance may be used. In addition, as an electrolyte (for example, an iodine electrolyte) used for the element, a chemically and electrochemically (practically) inactive electrolyte is required. Therefore, applying an insulating layer or a transparent conductive layer to the metal wiring layer as a protective layer has been proposed (see Published Japanese Translation No. 2000-536805 of PCT International Publication, Japanese Unexamined Patent Application, First Publication No. 2004-220920, Japanese Unexamined Patent Application, First Publication No. 2004-146425, PCT International Publication No. WO2004/032274, Japanese Unexamined Patent Application, First Publication No. 2007-042366, and M. Spath, et al., Progress in Photovoltaics: Research and Applications, vol. 11, pp. 207-220, H15 (2003).).

For the collector wires, a dense protective layer without defectiveness is needed to completely block the metal wires and the iodine electrolyte. As the wire protective layer, an inorganic material such as a transparent conductive metal oxide layer, glass, and the like has been considered. However, forming a dense layer composed of the inorganic material so as not to allow the electrolyte to permeate is difficult. In addition, since the inorganic material is hard and brittle, thermal expansion and the like need to be controlled.

In addition, for the wire protective layer, a resin material has also been considered. However, the resin material generally has low thermal resistance, and high-temperature firing cannot be performed on oxide semiconductor nanoparticles included in an optical electrode of a dye-sensitized solar cell. Particularly, when a cured resin is used, volatile components from the cured resin may contaminate nanoparticle surfaces, and this affects the electricity generation performance.

In addition, when a transparent conductive metal oxide is used as the protective layer in a method of forming a wire protective layer, a large facility such as a vacuum apparatus (used for sputtering, deposition, and the like), a CVD apparatus, and the like is needed. In addition, a technique using a thermoplastic resin film has been considered. However, there is a problem with positional accuracy when a wiring pattern is complex such that film bonding is difficult.

### SUMMARY OF THE INVENTION

The invention is designed to solve the above-mentioned problems. An object of the invention is to provide an electrode substrate used for a photoelectric conversion element, a method of manufacturing an electrode substrate for a photoelectric conversion element, and a photoelectric conversion element, according to which a dense protective layer without defectiveness can be formed and electricity generation performance can be enhanced.

To solve the above-mentioned problems, the invention provides a method of manufacturing an electrode substrate for a photoelectric conversion element which includes: forming a transparent conductive layer and a collector wire on a substrate; forming a porous oxide semiconductor layer on different portions of the transparent conductive layer from portions on which the collector wire is formed; firing the porous oxide semiconductor layer; forming a protective layer composed of an insulating resin having thermal resistance at 250°C or higher so as to cover the collector wire after the firing; and after forming the protective layer, allowing adsorption of dyes in the porous oxide semiconductor layer, and heating the substrate at 250°C or higher during or after the formation of the protective layer and before allowing adsorption of the dyes in the porous oxide semiconductor layer.
The heating temperature in heating process may be lower than the firing temperature in the tiring process.

The invention also provides an electrode substrate for a photoelectric conversion element which includes: a substrate having a transparent conductive layer and a collector wire thereon; a porous oxide semiconductor layer provided on different portions of the transparent conductive layer from portions on which the collector wire is formed, and a protective layer composed of an insulating resin formed to cover the collector wire, in which the protective layer is composed of the insulating resin having thermal resistance at 250°C or higher.
In the electrode substrate for a photoelectric conversion element according to the invention, the insulating resin having thermal resistance at 250°C or higher may be one or more kinds selected from the group consisting of a polyimide derivative, a silicone compound, a fluorine elastomer, and a fluorine resin.
The invention also provides a photoelectric conversion element having the above-mentioned electrode substrate for a photoelectric conversion element.

In the method of manufacturing the electrode substrate for a photoelectric conversion element according to the invention, before forming the wire protective layer composed of the insulating resin, the porous oxide semiconductor layer can be sufficiently fired. In addition, since the insulating resin is used for the protective layer, the dense protective layer without defectiveness can be formed. In addition, after forming the protective layer, the heating process is performed thereon before dye adsorption. Therefore, the method can be used for manufacturing the photoelectric conversion element having high electricity generation characteristics.

In the electrode substrate for a photoelectric conversion element according to the invention, the protective layer has thermal resistance at 250°C or higher. Therefore, after firing the porous oxide semiconductor layer, the heating process is performed thereon before dye adsorption, so that contaminants adsorbed in the porous oxide semiconductor layer can be reduced.

### BRIEF DESCRIPTION OF THE DRAWINGS

FIG. 1 is a sectional view illustrating a first example of an electrode substrate for a photoelectric conversion element according to the invention.
FIG. 2 is a sectional view illustrating a second example of the electrode substrate for a photoelectric conversion element according to the invention.
FIG. 3A is a process view illustrating a cross-section, which is for explaining a method of manufacturing the electrode substrate for a photoelectric conversion element illustrated in FIG. 1.
FIG. 3B is a process view illustrating a cross-section, which is for explaining the method of manufacturing the electrode substrate for a photoelectric conversion element illustrated in FIG. 1.
FIG. 3C is a process view illustrating a cross-section, which is for explaining the method of manufacturing the electrode substrate for a photoelectric conversion element illustrated in FIG. 1.
FIG. 3D is a process view illustrating a cross-section, which is for explaining the method of manufacturing the electrode substrate for a photoelectric conversion element illustrated in FIG. 1.
FIG. 4A is a process view illustrating a cross-section, which is for explaining a method of manufacturing the electrode substrate for a photoelectric conversion element illustrated in FIG. 2.
FIG. 4B is a process view illustrating a cross-section, which is for explaining the method of manufacturing the electrode substrate for a photoelectric conversion element illustrated in FIG. 2.
FIG. 4C is a process view illustrating a cross-section, which is for explaining the method of manufacturing the electrode substrate for a photoelectric conversion element illustrated in FIG. 2.
FIG. 4D is a process view illustrating a cross-section, which is for explaining the method of manufacturing the electrode substrate for a photoelectric conversion element illustrated in FIG. 2.
FIG. 5 is a sectional view illustrating a third example of the electrode substrate for a photoelectric conversion element according to the invention.
FIG. 6 is a sectional view illustrating a fourth example of the electrode substrates for a photoelectric conversion element according to the invention.
FIG. 7 is a sectional view illustrating an example of a photoelectric conversion element according to the invention.

### DESCRIPTION OF REFERENCE NUMERALS

- 10: ELECTRODE SUBSTRATE
- 11: SUBSTRATE
- 12: TRANSPARENT CONDUCTIVE LAYER
- 13: COLLECTOR WIRES
- 14: PROTECTIVE LAYER
- 15: POROUS OXIDE SEMICONDUCTOR LAYER IN WIIICH DYES ARE ADSORBED
- 15A: POROUS OXIDE SEMICONDUCTOR LAYER (BEFORE ALLOWING ADSORPTION OF DYES)
- 20: DYE-SENSITIZED SOLAR CELL (PHOTOELECTRIC CONVERSION ELEMENT)
- 21: COUNTER ELECTRODE
- 22: ELECTROLYTE

### DETAILED DESCRIPTION OF THE INVENTION

Hereinafter, best modes for the invention will be described with reference to the accompanying drawings.

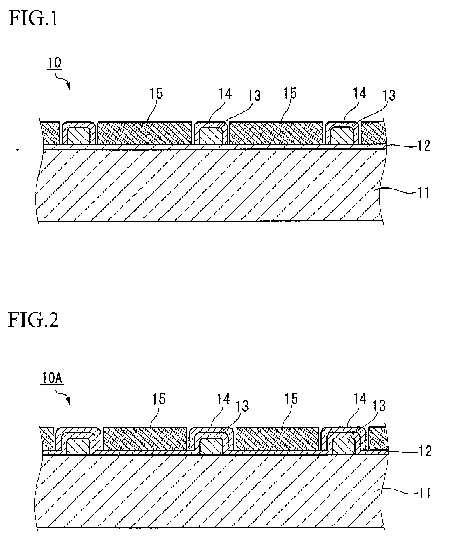

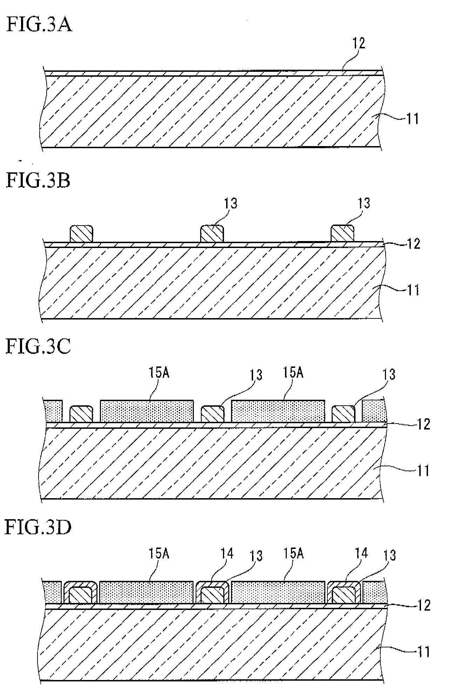

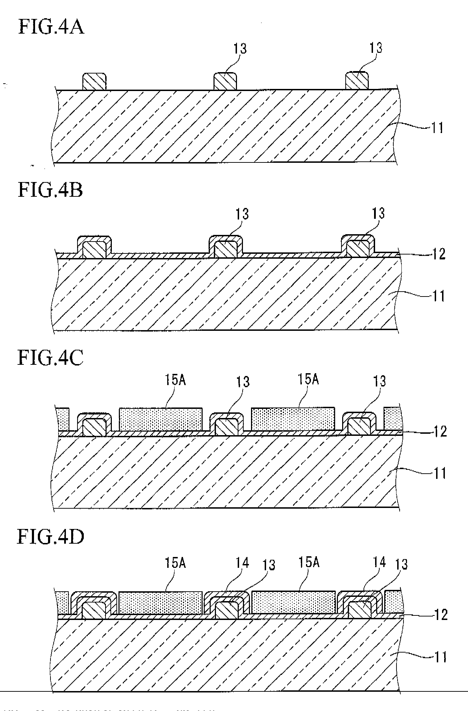

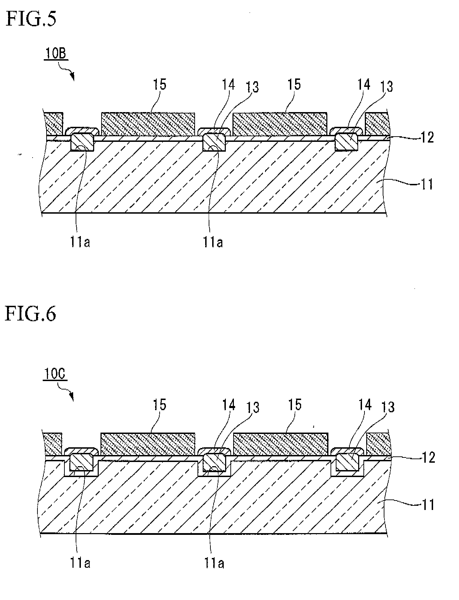

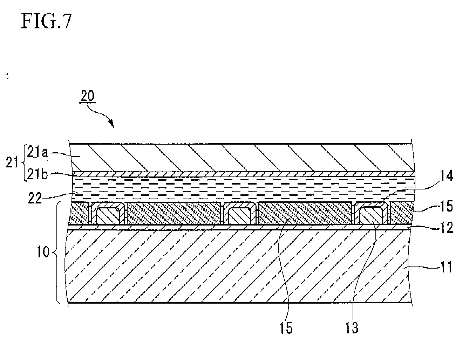

FIG. 1 is a sectional view illustrating a first example of an electrode substrate for a photoelectric conversion element according to the invention. FIG. 2 is a sectional view illustrating a second example of the electrode substrate for a photoelectric conversion element according to the invention. FIGS. 3A to 3D are process views illustrating cross-sections, which are for explaining a method of manufacturing the electrode substrate for the photoelectric conversion element illustrated in FIG. 1. FIG. 4A to 4D are process views illustrating cross-sections, which arc for explaining a method of manufacturing the electrode substrate for the photoelectric conversion element illustrated in FIG. 2. FIG. 5 is a sectional view illustrating a third example of the electrode substrate for a photoelectric conversion element according to the invention. FIG. 6 is a sectional view illustrating a fourth example of the electrode substrate for a photoelectric conversion element according to the invention. FIG. 7 is a sectional view illustrating an example of a photoelectric conversion element according to the invention.

The electrode substrate 10 for a photoelectric conversion element illustrated in FIG. 1 includes a substrate 11, a transparent conductive layer 12 formed on the substrate 11, a collector wire 13 (collector wires 13) formed on the transparent conductive layer 12, a protective layer 14 composed of an insulating resin formed to cover the collector wires 13, and a porous oxide semiconductor layer 15 formed on different portions of the transparent conductive layer 12 from portions thereof on which the collector wires 13 are formed.

The electrode substrate 10A for a photoelectric conversion element illustrated in FIG. 2 includes a substrate 11, collector wires 13 formed on the substrate 11, a transparent conductive layer 12 formed on portions of the substrate 11 where the collector wires 13 are not formed and on the collector wires 13, a protective layer 14 composed of an insulating resin formed to cover the collector wires 13 with the transparent conductive layer 12 interposed therebetween, and a porous oxide semiconductor layer 15 provided on different portions of the transparent conductive layer 12 from portions thereof on which the collector wires 13 are formed.

As a material of the substrate 11, any material to practically form a transparent substrate such as glass, resin, ceramic, and the like may be used without limitation. Particularly, so as not to cause deformation, transformation, and the like of the substrate upon firing of the porous oxide semiconductor layer, a high-strain-point glass is preferable in terms of its excellent thermal resistance. However, soda-lime glass, white glass, borosilicate glass, and the like may be suitably used.

A material of the transparent conductive layer 12 is not limited. For example, a conductive metal oxide such as tin-doped indium oxide (ITO), tin oxide (SnO₂), fluorine-doped tin oxide (FTO), and the like may be employed. As a method of forming the transparent conductive layer 12, a well-known method suitable for a corresponding material may be used. For example, there are sputtering, deposition, SPD, CVD, and the like. In addition, in consideration of light transparency and conductivity, the thickness of the transparent conductive layer 12 is generally in the range of 0.001 to 10 µm.

The collector wires 13 may be wires composed of metal such as gold, silver, copper, platinum, aluminum, nickel, titanium, or the like and formed in a pattern such as a grid pattern, a striped pattern, a comb pattern, or the like. So as not to significantly affect light transparency of the electrode substrate, the width of each wire may not be greater than 1,000 µm. The thickness (height) of each of the wires constituting the collector wires 13 is not particularly limited and may be in the range of 0.1 to 20 µm.

As a method of forming the collector wires 13, for example, there is a method in which a metal powder that serves as conductive particles is mixed with a binder such as glass fine particles into a paste form, the paste is applied to form a predetermined pattern by a printing technique such as screen printing, dispensing, metal mask printing, inkjet printing, or the like, and the conductive particles are fused by firing. The firing temperature is preferably 600°C or less, and more preferably, 550°C or less, when the substrate 11 is, for example, a glass substrate. In addition, forming methods such as sputtering, deposition, plating, and the like may be used. In terms of conductivity, the volume resistivity of the collector wires 13 is preferably less than or equal to 10⁻⁵ Ω·cm.

The protective layer 14 is composed of an insulating resin having thermal resistance at 250°C or higher so as to be subject to heat treatments at 250°C or higher. Particularly, an insulating resin having thermal resistance at 300 °C or higher is preferable.

According to the invention, when the outer appearance of a resin is not deformed and weight reduction thereof is less than or equal to 30% during exposure for 1 to 2 hours at the set temperature, the temperature is determined as the heat resistance temperature of the resin. Therefore, the insulating resin having thermal resistance at 250°C or higher means an insulating resin of which weight reduction during exposure at a temperature of 250°C for 1 to 2 hours is less than or equal to 30%, and the insulating resin having thermal resistance at 300°C or higher means an insulating resin of which weight reduction during exposure at a temperature of 300°C for 1 to 2 hours is less than or equal to 30%.

As the insulating resin having thermal resistance at 250°C or higher, at least one selected from a polyimide derivative, a silicone compound, a fluorine elastomer, and a fluorine resin may used singly or in combination by blending or laminating them. As the fluorine resin, one or more kinds selected from the group consisting of Teflon (registered trademark) compounds such as polytetrafluoroethylene, a tctrafluoroethylene-perfluoroalkylvinylether copolymer, a tetrafluoroethylene-hexafluoropropylene copolymer, and the like. In addition, as the insulating resin having thermal resistance at 300°C or higher, one or more kinds of those having thermal resistance at 300°C or higher among the insulating resins having thermal resistance at 250°C or higher may be selected for use. By applying a resin material having high flexibility to the insulating resin layer, concerns about impact failure, fracture, and the like of the protective layer 14 decrease,

As a method of forming the protective layer 14, there is a method of applying a varnish or a paste including the insulating resin. In order to enhance denseness of the protective layer 14, the application may be repeatedly performed to form a multilayer.

The porous oxide semiconductor layer 15 is a porous layer obtained by firing oxide semiconductor nanoparticles (fine particles with an average particle diameter of 1 to 1,000 nm). As the oxide semiconductor, one or more kinds selected from the group consisting of titanium oxide (TiO₂), tin oxide (SnO₂), tungsten oxide (WO₃), zinc oxide (ZnO), niobium oxide (Nb₂O₅), and the like may be used. The thickness of the porous oxide semiconductor layer 15 may range, for example, from 0.5 to 50 µm.

As a method of forming the porous oxide semiconductor layer 15, for example, a method is employed, in which a desired additive is added to a dispersion liquid in which commercially available oxide semiconductor fine particles are dispersed in a dispersion medium, or to a colloid solution that can be adjusted by a sol-gel process, depending on applications, and the liquid is applied by well-known method such as screen printing, inkjet printing, roll coating, doctor blade coating, spin coating, spray coating, and the like. Or an electrophoretic deposition is employed for depositing oxide semiconductor fine particles immersed in a colloid liquid by electorphoresis. Or a method of mixing a blowing agent with a colloid liquid or a dispersion liquid and applying and firing the mixture so as to be porous is employed. Or a method of adding polymer microbeads so as to be mixed and applied and removing the polymer microbeads to form pores by performing heat treatment or chemical treatment, and the like is employed.

Sensitizing dyes to be carried on the porous oxide semiconductor layer 15 are not limited and may be suitably selected from a ruthenium complex or an iron complex with a ligand including a bipyridine structure, a ter-pyridine structure, and the like, a metal complex based on porphyrin or phthalocyanine, an organic dye or the like as derivative such as cosin, rhodamine, coumarin, merocyanine, and the like, depending on applications and the material of the oxide semiconductor porous layer.

The electrode substrate for a photoelectric conversion element in this embodiment may be manufactured in the following order.
First, the transparent conductive layer 12 and the collector wires 13 are formed on the substrate 1 In this process, a temporal relationship between the formation of the transparent conductive layer 12 and the formation of the collector wires 13 is not limited, and either of forming the collector wires 13 after forming the transparent conductive layer 12, or forming the transparent conductive layer 12 after forming the collector wires 13, is acceptable. In addition, as illustrated in FIG. 2, when the collector wires 13 and the porous oxide semiconductor layer 15 are to be provided on the transparent conductive layer 12, forming the porous oxide semiconductor layer 15 may be performed before forming the collector wires 13.

For example, as illustrated in FUG. 1, when the electrode substrate 10 in which the collector wires 13 are provided on the transparent conductive layer 12 is to be manufactured, a method of forming the collector wires 13 on the transparent conductive layer 12, as illustrated in FIG. 3B, after forming the transparent conductive layer 12 on the substrate 11, as illustrated in FIG. 3A, may be employed.

In addition, as illustrated in FIG. 2, when the electrode substrate 10A in which the transparent conductive layer 12 is provided on the collector wires 13 is to be manufactured, a method of forming the transparent conductive layer 12 on the collector wires 13, as illustrated in FIG. 4B, after forming the collector wires 13 on the substrate 11, 1, as illustrated in FIG. 4A, maybe employed.

As described above, after forming the substrate 11 having the transparent conductive layer 12 and the collector wires 13 thereon, as illustrated in FIGS. 3C and 4C, the porous oxide semiconductor layer 15A is formed by a method of applying a paste of oxide semiconductor nanoparticles to different portions of the transparent conductive layer 12 from portions thereof on which the collector wires 13 are formed. After forming the porous oxide semiconductor layer 15A, the porous oxide semiconductor layer 15A is heated and fired at a temperature of about 400 to 550 °C.

After firing the porous oxide semiconductor layer 15A, as illustrated in FIGS, 3D and 4D, the protective layer 14 composed of the insulating resin is formed to cover the collector wires 13. During or after the process of forming the protective layer 14 and before a process of allowing the adsorption of dyes in the porous oxide semiconductor layer 15A, a process of heating the substrate 11 is additionally provided. The heating temperature in the heating process may be lower than the firing temperature in the firing process.
The heating process may be performed after the process of forming the protective layer 14. Specifically, when the insulating resin used for forming the protective layer 14 is, for example, a thermosetting resin and needs to be heated during the curing reaction, the heating process may be performed during the process of forming the protective layer 14. Otherwise, the heating process may be performed during and after the process of forming the protective layer 14.

The heating temperature in the heating process is 250°C or higher. By performing heat treatment at a temperature of 250°C or higher, the organic materials (contaminants) adsorbed on the surface of the porous oxide semiconductor layer 15A can be removed, and the contaminants are prevented from inhibiting the dyes from being carried (adsorption of dyes in the porous oxide semiconductor layer 15A). The heating temperature in the heating process may be 300°C or higher.

After forming the protective layer 14, by allowing adsorption of the dyes in the porous oxide semiconductor layer 15A, as illustrated in FIGS. 1 and 2, the electrode substrates 10 and 10A having the porous oxide semiconductor layers 15 in which the dyes are adsorbed are completed. A method of forming the protective layer composed of the insulating resin after the process of allowing adsorption of the dyes may bc considered. However, in consideration of the contamination on the surface of the collector wires 13 and damage to the dyes during curing (heat treatment in case of a thermosetting resin, UV irradiation in case of a UV curing resin, and the like) of the insulating resin, allowing the dyes to be carried after forming the protective layer 14 is is preferable.

For the electrode substrates according to the invention, the substrate 11 may be the substrate 11 of which the surface is flat as illustrated in FIGS. 1 and 2. Otherwise, as illustrated in FIGS. 5 and 6, by using a substrate I having concave portions 11a as grooves aligned with the collector wires 13 on the surface, at least a lower portion or the entire portion of the collector wire 13 may be formed inside the concave portion 11 a. The electrode substrates may be manufactured by the same manufacturing method of the electrode substrates illustrated in FIGS, 1 and 2 except that the collector wires 13 are formed along the concave portions 11a.

For example, an electrode substrate 10B illustrated in FIG. 5, includes a substrate 11 having concave portions 11a, a transparent conductive layer 12 formed on different portions of the substrate 11 from potions at which the concave portions 11a are formed, collector wires 13 formed from the bottom of the concave portions 11a, protective layer 14 composed of an insulating resin and formed to cover the collector wires 13, and a porous oxide semiconductor layer 15 formed on different portions of the transparent conductive layer 12 from portions thereof on which the collector wires 13 are formed.

In addition, an electrode substrate 10C illustrated in FIG. 6, includes a substrate 11 having concave portions 11a, a transparent conductive layer 12 formed on the substrate 11 and lower and side surfaces of the concave portions 11a, collector wires 13 formed on the transparent conductive layer 12 inside the concave portions 11a, a protective layer 14 composed of an insulating resin and formed to cover the collector wires 13, and a porous oxide semiconductor layer 15 provide on different portions of the transparent conductive layer 12 from portions thereof on which the collector wires 13 are formed.

The electrode substrate for a photoelectric conversion element according to the invention may be used as an optical electrode of a photoelectric conversion element such as a dye-sensitized solar cell. FIG. 7 illustrates a configuration example of the photoelectric conversion element 20 (dye-sensitized solar cell). The dye-sensitized solar cell includes an optical electrode including the electrode substrate 10 for a photoelectric conversion element of the embodiment, a counter electrode 21 facing the optical electrode, and an electrolyte 22 filled between the both electrodes. In FIG. 7, the electrode substrate 10 for a photoelectric conversion element illustrated in FIG. 1 is exemplified. However, any one of the electrode substrates 10A, 10B, and 10C for a photoelectric conversion element illustrated in FIGS. 2, 5, and 6, respectively, and the electrode substrate for a photoelectric conversion element according to the invention can be used.

As the counter electrode 21, although not particularly limited, specifically those in which a catalyst layer 21 b such as platinum, carbon, a conductive polymer, and the like is formed on a surface of a base material 21a such as a metal plate, a metal foil, and a glass plate may be exemplified. In order to enhance conductivity of the surface of the counter electrode, an additional conductive layer may be provided between the base material 21a and the catalyst layer 21b.

As the electrolyte 22, an organic solvent including a redox pair, a room-temperature molten salt (ionic liquid), and the like may be used. In addition, instead of an electrolyte liquid, an electrolyte solution may be used, which is added with a suitable gellant (for example, a high-molecular gellant, a low-molecular gellant, various types of nanoparticles, carboy nanotubes, and the like) and quasi-solidified so as to become what is known as a gel electrolyte.

As the organic solvent, although not particularly limited, one or more kinds of acetonitrile, methoxyacetonitril, propionitril, methoxypropionitril, propylene carbonate, diethyl carbonate, γ-butyrolactone, and the like may be exemplified. As the room-temperature molten salt, one or more kinds of room-temperature molten salt including a cation such as an imidazolium cation, a pyrrolidinium cation, a pyridinium cation, and the like and an anion such as an iodide ion, a bis[(trifluoromethyl)sulfonyl]amide anion, a dicyanoamide anion, a thiocyanic acid anion, and the like may be exemplified.

As the redox pair contained in the electrolyte, although not particularly limited, one or more kinds ofpairs such as an iodine/iodide ion, a bromine/bromide ion, and the like may be added. As a source of the iodide ion and the bromide ion, one or more selected from lithium salt, quaternary imidazolium salt, tetrabutylammonium salt, and the like, which contain the anion of the iodine ion or the bromide ion, may be used singly, or in combination. To the electrolyte, as needed, an additive such as 4-tert-butylpyridine, N- methybenzimidazol, guadinium salt, and the like may be added.

In the photoelectric conversion element according to the invention, the collector wires of the electrode substrate are provided with the protective layer without defects such as pinholes, so that the photoelectric conversion element can achieve excellent electricity generation performance.

### Examples

Now, Examples of the invention will be described in detail. In addition, the invention is not limited to the examples.

### Manufacturing of Electrode Substrate

### Glass Substrate

i) high-strain-point glass PD200 (Asahi glass Co, Ltd)
ii) heat-resistant glass TEMPAX 8330 (SCHOTT)
iii) commercially available FTO glass (Nihon sheet glass Co. Ltd)

### Wire Protective Material

a) polyimide varnish (I. S, T), breaking elongation 5% or higher (about 65%), curing temperature Max 350°C to 400°C
b) silicone varnish (GE Toshiba silicone Co. Ltd), breaking elongation 5% or higher, curing temperature 300°C or less
c) fluorine elastomer SIFEL (Shin-Etsu chemical Co. Ltd), breaking elongation 5% or higher (about 200%), curing temperature 300°C or less
d) Teflon (registered trademark) coating material (Nippon fine coatings Inc), breaking elongation 5% or higher, treatment temperature 300°C or less
e) low-melting-point glass (Fukuda metal foil & powder Co. Ltd), breaking elongation less than 5%, firing temperature 450°C
f) UV curing resin (Threebond co. Ltd)

In addition, in order to examine thermal resistance of the wire protective materials (a) to (d), each material was heated at 250°C for 1 hour, and weight reduction and the outer appearance thereof were measured. The weight reduction of each material was less than or equal to 30%, and the outer appearance thereof had no problems. Thermal resistance of the wire protective material (d) was also examined as described above. Here, the weight reduction thereof was higher than 30%, and the outer appearance had problems.

Glass substrates (which is 140mm square and coated with an FTO film on the surface) of (i), (ii), and (iii) were prepared, and a silver circuit was formed on the FTO film in a grid pattern by screen printing. In designing the shape of the circuit, the circuit width was set to 300 µm, and the thickness was set to 10 µm. For printing, silver paste with a volume resistivity after firing of 3×10⁻⁶ Ωcm was used. After printing, the silver paste was dried at 130°C, and the silver circuit was fired at the maximum temperature of 510°C, thereby forming the circuit.

Next, on different portions of the FTO film from portions thereof on which the silver circuit was formed, a paste containing TiO₂ nanoparticles was applied by screen printing, dried, and fired at 500°C, thereby forming the porous oxide semiconductor layer.

Next, the wire protective materials of (a) to (f) were applied to overlap with the circuit formation portion and completely cover the silver circuit, and treated at the maximum temperature of 300 to 350°C, thereby forming the wire protective layer, Here, for those requiring heating only at a temperature lower than 300°C during the formation of the wire protective layer, heat treatment was performed at 300°C for 1 hour after the formation of the wire protective layer, so as to remove contaminants on the surface of the porous oxide semiconductor layer, The design width of the wire protective layer was set to 600 µm, and the wire protective layer was applied by screen printing or dispensing while aligned with the silver circuit by using a CCD camera.

For the electrode substrates manufactured as described above, 14 combinations of the glass substrate and the wire protective material were obtained as combinations of (i) and (a), (ii) and (a), (iii) and (a), (i) and (b), (ii) and (b), (iii) and (b), (i) and (e), (ii) and (c), (iii) and (c), (i) and (d), (ii) and (d), (iii) and (d), (i) and (f), and (ii) and (e).

In a comparative example using the combination of (i) and (f), the resin layer was damage by the heat treatment at 300°C, so that it could not function as the wire protective layer. In a comparative example using the combination of (ii) and (e), the protective layer was observed after the firing process. Here, a crack connected to the silver circuit had occurred, and characteristics to be satisfied for the wire protective layer could not be obtained.

Examination on Heat Treatment Temperature In a desiccator, a glass substrate of which a surface was coated with the varnish of (a), and an FTO electrode substrate including a titania (TiO₂) porous layer which is 5mm square were left for a day. Thereafter, heat treatment was performed thereon at each corresponding treatment temperature represented in left sections of Table 1 for 30 minutes to carry the dyes. By combining the FTO electrode substrate on which the dyes were carried as the optical electrode with the counter electrode and the electrolyte, a small cell was manufactured, and photoelectric conversion characteristics thereof were measured. The measurement results are represented in Table 1.

**Table 1**

| Treatment Temperature | Photoelectric Conversion Efficiency |
|---|---|
| 100°C | 3.2% |
| 150°C | 3.3% |
| 200°C | 4.6% |
| 250°C; | 5.1% |
| 300°C | 7.0% |
| 350°C | 7.2% |
| 400°C | 7.2% |

From the measurement results, it can be seen that the proper heat treatment temperature for removing contaminants on the surface of the porous oxide semiconductor layer caused by the varnish is preferably 250°C or higher, and more preferably, 300°C or higher.

### Manufacturing of Dye-Sensitized Solar Cell

By using the electrode substrate having the aforementioned construction, a dye-sensitizcd solar cell was manufactured, and characteristic evaluation thereof was performed. The method of manufacturing the dye-sensitized solar cell and the measurement condition are described as follows.

The glass substrates (which is 140mm square and coated with an FTO film on the surface) of (i), (ii), and (iii) were prepared, and a silver circuit (with a circuit width of 300 µm and a thickness of 10 µm) was formed on the FTO film by screen printing. Thereafter, a paste including TiO₂ nanoparticles was applied on different portions of the FTO film from portions thereof on which the silver circuit was formed, by screen printing, and then dried and fired at 500°C, thereby forming the porous oxide semiconductor layer. Next, the wire protective materials of (a) to (f) were applied to overlap with the circuit formation portion and completely cover the silver circuit, thereby forming the wire protective layer (with the design width of 600 µm). Here, for those requiring heating only at a temperature lower than 300°C during the formation of the wire protective layer, heat treatment was performed at 350°C for 1 hour after the formation of the wire protective layer so as to remove contaminants on the surface of the porous oxide semiconductor layer. This was immersed into an aectonitrile/t-butanol solution of ruthenium bipyridine complex (N719 dye) for more than a day so as to carry the dyes, thereby manufacturing the optical electrode.

As the counter electrode, a titanium (Ti) foil and a platinum (Pt) layer formed thereon by sputtering were used. In a circulation and purification type glove box filled with inert gas, an iodine electrolyte is deployed so as to be stacked on the optical electrode and face the counter electrode, and the periphery of the element is sealed by the UV curing resin. As the iodine electrolyte, the following A and B were used. In addition, M represents mol/L,

Electrolyte A; 0.5M 1, 2-dimethyl-3-propylimidazolium iodide and 0.05M iodine was dissolved in methoxyacetonitril, and an adequate amount of lithium iodide and 4-tert- butylpyridine was added thereto.

Electrolyte B; 1-hexyl-3-methyl imidazolium iodide and iodine were mixed at a molar ratio of 10:1, an adequate amount of N-methylbenzimidazol and thiocyanic acid guadinium was added thereto, and SiO₂ nanoparticles of 4 wt% were mixed therewith, followed by kneading into a quasi-solid.

Electricity generation characteristics of the dye-sensitized solar cell were measured by irradiating quasi-sunlight of AM1.5, 100 mW/cm². The measurement results are represented in Table 2.

**Table 2**

| Electrode Substrate | | Photoelectric Conversion Efficiency | |
|---|---|---|---|
| Substrate | Protective Layer | Electrolyte A | Electrolyte B |
| i) | a) | 5.8% | 4.1% |
| ii) | a) | 5.7% | 3.9% |
| iii) | a) | 6.1% | 3.9% |
| i) | b) | 5.7% | 3.6% |
| ii) | b) | 5.4% | 3.9% |
| iii) | b) | 5.8% | 4.0% |
| i) | c) | 5.6% | 3.7% |
| ii) | c) | 6.1% | 3.7% |
| iii) | c) | 5.5% | 3.6% |
| i) | d) | 5.2% | 3.4% |
| ii) | d) | 5.5% | 3.4% |
| iii) | d) | 5.6% | 3.7% |
| i) | f) | 1.4% | 1.1% |
| ii) | e) | 3.0% | 2.4% |

From the measurement results, it can be seen that in the 12 examples from (i) - (a) to (iii) - (d), both of the electrolytes A and B had obtained good photoelectric conversion efficiency. The combinations in the comparative examples of (i) - (f) and (ii) - (e) showed low photoelectric conversion efficiency.

The invention can be used for the photoelectric conversion element such as the dye-sensitized solar cell.

## Claims

1. A method of manufacturing an electrode substrate for a photoelectric conversion element, comprising:
forming a transparent conductive layer and a collector wire on a substrate;
forming a porous oxide semiconductor layer on different portions of the transparent conductive layer from portions on which the collector wire is formed;
firing the porous oxide semiconductor layer;
forming a protective layer composed of an insulating resin having thermal resistance at 250 °C or higher so as to cover the collector wire after the firing; and
after forming the protective layer, allowing adsorption of dyes in the porous oxide semiconductor layer, and heating the substrate at 250 °C or higher during or after the formation of the protective layer and before allowing adsorption of the dyes in the porous oxide semiconductor layer.

2. The method according to claim 1, wherein the heating temperature in the heating process is lower than the firing temperature in the firing process.

3. An electrode substrate for a photoelectric conversion element, comprising:
a substrate having a transparent conductive layer and a collector wire thereon;
a porous oxide semiconductor layer provided on different portions of the transparent conductive layer from portions on which the collector wire is formed; and
a protective layer composed of an insulating resin formed to cover the collector wire,
wherein the protective layer is composed of the insulating resin having thermal resistance at 250 °C or higher.

4. The electrode substrate according to claim 3, wherein the insulating resin having thermal resistance at 250 °C or higher is one or more kinds selected from the group consisting of a polyimide derivative, a silicone compound, a fluorine elastomer, and a fluorine resin.

5. A photoelectric conversion element having the electrode substrate for a photoelectric conversion element according to claim 3 or 4.
